# FASCICULE DE BREVET EUROPEEN

(11) **EP 3 550 537 B1**
(45) Date de publication et mention de la délivrance du brevet: **01.12.2021**
(21) Numéro de dépôt: 19166904.3
(22) Date de dépôt: 02.04.2019
(51) Int. Cl.: G08C 17/02

(54) **DISPOSITIF DE COMMANDE SANS FIL ET ENSEMBLE COMPRENANT UN TEL DISPOSITIF, AINSI QU'UN AUTRE DISPOSITIF DE COMMANDE APTE À ÊTRE BRANCHÉ SUR UN FIL ÉLECTRIQUE**
DRAHTLOSE STEUERVORRICHTUNG UND ANORDNUNG, DIE EINE SOLCHE VORRICHTUNG SOWIE EINE ANDERE STEUERVORRICHTUNG UMFASST, DIE AN EINE ELEKTRISCHE LEITUNG ANGESCHLOSSEN WERDEN KANN
WIRELESS CONTROL DEVICE AND ASSEMBLY COMPRISING SUCH A DEVICE, AS WELL AS ANOTHER CONTROL DEVICE CAPABLE OF BEING CONNECTED TO AN ELECTRIC WIRE

(30) Priorité: 03.04.2018 FR 1852872
(43) Date de publication de la demande: 09.10.2019
(60) Demande divisionnaire: 21175991.5
(73) Titulaire: Schneider Electric Industries SAS, 92500 Rueil Malmaison (FR)
(72) Inventeur: PAYET-BURIN, Jean-Luc, 38050 GRENOBLE CEDEX 09 (FR)
(74) Mandataire: Lavoix

(56) Documents cités:
- EP-A2- 2 328 132
- WO-A1-2006/009540
- US-A1- 2005 275 581

## Description

La présente invention concerne un dispositif de commande sans fil.

Classiquement, un dispositif de commande sans-fil est un interrupteur du type communiquant, communément appelé interrupteur sans fil sans pile, capable de commander à distance un autre interrupteur qui lui est branché sur un fil électrique, tel que par exemple un fil électrique d'alimentation d'un luminaire. Souvent, cet autre interrupteur est qualifié de micromodule, car il est associé, d'une part, à un récepteur capable de recevoir des signaux envoyés par un émetteur de l'interrupteur sans fil et, d'autre part, à une unité de traitement. Notamment, pour des luminaires, on parlera d'un micromodule d'éclairage. Un interrupteur sans fil peut également être utilisé pour commander à distance un volet roulant ou un store.

Les interrupteurs sans fil présentent l'avantage qu'ils peuvent être positionnés pratiquement n'importe où, et notamment hors du chemin emprunté par le câble d'alimentation électrique. L'utilisateur peut donc choisir l'endroit qui lui parait le plus ergonomique. Un interrupteur sans fil peut être placé, comme un interrupteur classique, dans une réservation du mur, ou tout simplement collé ou vissé contre la paroi.

Généralement, l'interrupteur sans fil communique avec le micromodule par voie radio, c'est-à-dire par transmission hertzienne.

Auparavant, les interrupteurs sans fil comportaient des piles pour alimenter l'émetteur. Toutefois, il fallait changer la pile au bout d'un certain temps, ce qui n'était pas très commode pour les usagers.

Ainsi, les interrupteurs sans fil fonctionnent aujourd'hui sans pile, mais avec un convertisseur d'énergie, que l'on appelle « energy harvester ». Ces convertisseurs d'énergie sont en fait des générateurs électriques qui tirent profit de l'énergie mécanique exercée par l'utilisateur lorsqu'il appuie sur le bouton de l'interrupteur pour générer un signal électrique. Ce signal électrique a une amplitude suffisante pour permettre de générer et d'envoyer un signal de commande au micromodule placé à distance. On connait principalement des convertisseurs du type piézoélectrique, utilisant les propriétés d'un matériau à générer une tension lorsqu'il subit des contraintes mécanique et les convertisseurs du type électromagnétique, utilisant le déplacement d'un aimant pour générer des courants induits dans un circuit.

DE 1 0256 156 divulgue un exemple d'un interrupteur sans fil et sans pile. L'avantage d'utiliser un convertisseur d'énergie dans un interrupteur sans fil est que l'interrupteur est complètement autonome et donc qu'il n'y a pas besoin de changer la pile.

Toutefois, l'inconvénient des interrupteurs sans fil du marché est que le bouton est relativement difficile à actionner, du moins par rapport à un interrupteur classique branché sur le fil d'alimentation. Plus précisément, l'effort nécessaire pour actionner les interrupteurs sans fil actuels est compris entre 7 et 10N, alors que l'effort nécessaire pour actionner un interrupteur standard branché sur fil est de l'ordre de 3N. Ainsi, les interrupteurs sans fil du marché ne sont par exemple pas adaptés aux enfants.

US 2005/275581 et WO 2006/009540 divulguent un dispositif de commande sans fil comprenant un bouton d'actionnement, un circuit électronique de commande, comportant un émetteur capable de transmettre, par voie sans fil, un signal de commande à un autre dispositif de commande branché sur un fil électrique, un générateur électrique pour alimenter le circuit électronique, et un organe de transmission pour transmettre une énergie mécanique appliquée sur le bouton d'actionnement au générateur.

C'est à cet inconvénient qu'entend plus particulièrement remédier l'invention, en proposant un nouveau type d'interrupteur sans fil et sans pile, avec une force d'actionnement moindre, comparable à celle des interrupteurs classiques branchés sur fil.

A cet effet l'invention concerne un dispositif de commande sans fil, comprenant :
- un bouton d'actionnement du dispositif pour l'envoi d'un signal de commande à un autre dispositif, basculant et pivotant autour d'un axe sous l'effet d'une force d'activation,
- un circuit électronique de commande, comportant un émetteur capable de transmettre, par voie sans fil, un signal de commande à un autre dispositif de commande branché sur un fil électrique,
- un générateur électrique pour alimenter le circuit, ce générateur étant capable de convertir une énergie mécanique en énergie électrique,
- un organe de transmission, pour transmettre une énergie mécanique appliquée sur le bouton d'actionnement au générateur.

Ce dispositif de commande est caractérisé en ce que le générateur électrique comprend au moins une bobine et un bloc coulissant guidé dans un rail et comprenant au moins un aimant,
en ce que le dispositif de commande sans fil comprend un mécanisme incluant un levier d'actionnement, le levier d'actionnement comprenant une première partie configurée pour coopérer avec l'organe de transmission et une seconde partie reliée au bloc coulissant du générateur,
en ce que le mécanisme est configuré pour générer un mouvement de translation à partir d'un mouvement de rotation de l'organe de transmission,
en ce que l'organe de transmission est un levier articulé autour d'un pion ayant un pied et un chapeau, mobile en rotation autour d'un axe de pivotement perpendiculaire, et de préférence sécant, avec l'axe de pivotement du bouton, l'organe de transmission comprenant une partie en C conformée pour coopérer avec le chapeau du pion et permettre l'articulation de l'organe de transmission autour du pion, des premiers moyens pour coopérer mécaniquement avec la première partie du levier d'actionnement et des seconds moyens pour coopérer mécaniquement avec le bouton d'actionnement,
en ce que l'organe de transmission est configuré pour pivoter sous l'effet de la force d'activation du bouton lorsque le bouton pousse sur les seconds moyens de l'organe de transmission,
en ce que le levier d'actionnement est configuré pour basculer autour d'un axe lorsque l'organe de transmission pivote autour de son axe de pivotement,
en ce que le bloc coulissant est configuré pour être déplacé en translation dans le rail, sous l'effet du basculement du levier d'actionnement,
de telle sorte que le bouton d'actionnement et l'organe de transmission sont spécifiquement conçus de sorte que la force d'activation du bouton d'actionnement est inférieure à la force transmise au générateur par l'organe de transmission.

Grâce à l'invention, l'effort qui est finalement transmis au générateur à travers l'organe de transmission de l'interrupteur est supérieur à l'effort appliqué en entrée, c'est-à-dire à l'effort exercé par un utilisateur lorsqu'il appuie sur le bouton. Ainsi, les calculs montrent que l'on peut exercer un effort de 4,20 N environ au niveau du générateur simplement en exerçant un effort de l'ordre de 2 ou 3N sur le bouton, en prenant en compte les frottements, ce qui correspond sensiblement à l'effort nécessaire pour actionner un interrupteur classique branché sur un fil. Ceci provient en fait des effets de levier que l'on retrouve dans la cinématique d'actionnement de l'interrupteur.

Selon des aspects avantageux, mais non obligatoires de l'invention, le dispositif de commande sans fil peut comporter une ou plusieurs des caractéristiques suivantes, prises dans toute combinaison techniquement admissible :
- Les premiers moyens comprennent deux faces bombées.
- Le bouton comprend au moins une, de préférence deux pattes aptes à coopérer avec l'organe de transmission.
- Les deux pattes sont disposées de part et d'autre des seconds moyens de l'organe de transmission et sont aptes à pousser l'organe de transmission suivant une direction perpendiculaire à un axe de basculement du bouton.
- Les premiers moyens de l'organe de transmission comprennent une fente dans laquelle est reçue la première partie du levier d'actionnement.
- Le dispositif de commande ne comporte pas de pile.

L'invention concerne également un ensemble comprenant un dispositif de commande sans fil tel que défini précédemment et un autre dispositif de commande, qui est apte à être branché sur un fil électrique et qui comporte un micro-récepteur configuré pour recevoir un signal de commande envoyé par le dispositif sans-fil.

L'invention et d'autres avantages de celle-ci apparaitront plus clairement à la lumière de la description qui va suivre d'un mode de réalisation d'un dispositif de commande sans fil conforme à son principe, donnée uniquement à titre d'exemple et faite en référence aux dessins annexés dans lesquels :
- La figure 1 est une vue éclatée d'un dispositif de commande sans fil conforme à un premier mode de réalisation de l'invention,
- La figure 2 est une vue en perspective du dispositif de commande de la figure 1, alors en configuration assemblée,
- La figure 3 est une vue de dessus du dispositif de commande des figures 1 et 2, dans laquelle le bouton d'actionnement du dispositif est omis pour permettre une meilleure visualisation des autres composants du dispositif,
- La figure 4 est une vue en perspective d'un organe de transmission du dispositif de commande, alors assemblé avec un générateur électrique capable de convertir l'énergie mécanique transmise à l'organe en une énergie électrique, et
- La figure 5 est une vue en perspective montrant notamment le dessous du bouton.

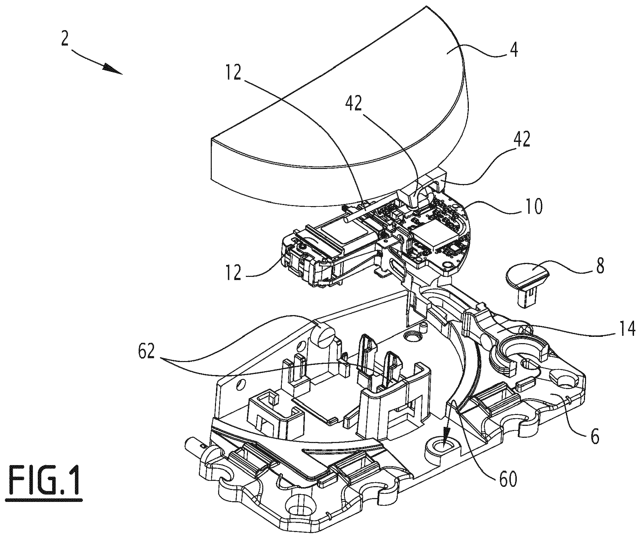

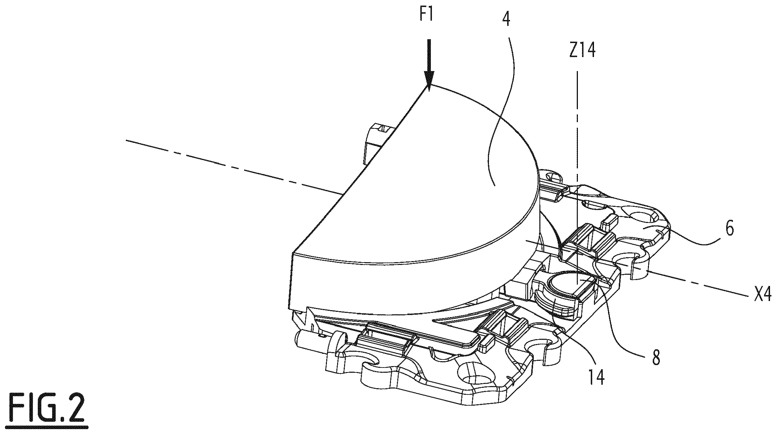

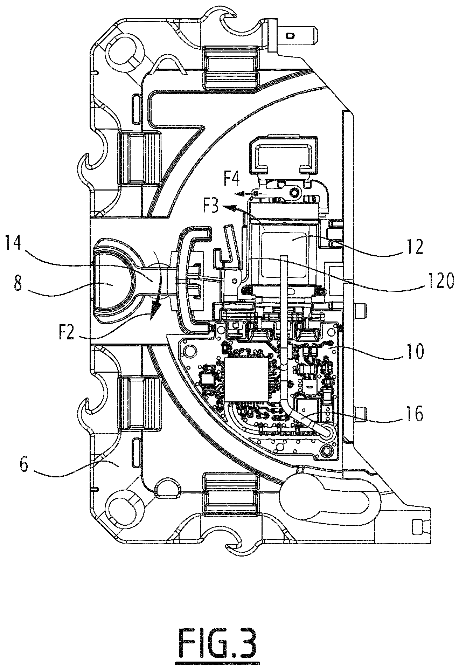

Sur les figures 1 à 5 est représenté un mode de réalisation d'un dispositif de commande, ou interrupteur sans fil et sans pile 2.

Cet interrupteur 2 comprend un bouton d'actionnement 4, un circuit électronique de commande 10, un générateur électrique 12 pour alimenter le circuit 10 et un organe de transmission 14, pour transmettre une énergie mécanique appliquée sur le bouton d'actionnement 4 au générateur 12.

Le circuit électronique 10 comporte un émetteur 16 capable de transmettre, par voie sans fil, un signal de commande à un autre interrupteur (non représenté) branché sur un fil électrique, tel que par exemple un fil électrique d'alimentation d'un luminaire. Cet autre interrupteur peut être mieux connu sous le nom de micromodule, car il est associé, d'une part, à un récepteur capable de recevoir des signaux envoyés par l'émetteur de l'interrupteur sans fil et, d'autre part, à une unité de traitement. Notamment, pour des luminaires, on parlera d'un micromodule d'éclairage.

On parle alors d'un ensemble comprenant l'interrupteur sans fil 2 et ledit autre interrupteur, qui est apte à être branché sur un fil électrique et qui comporte un micro-récepteur configuré pour recevoir un signal de commande envoyé par l'interrupteur sans-fil.

Avantageusement, l'émetteur 16 est une antenne, notamment une antenne capable de transmettre un signal par voie hertzienne, c'est-à-dire d'émettre des ondes électromagnétiques. En variante, d'autres modes de transmission pourraient être utilisés, comme la technologie Bluetooth low energy ou le protocole ZigBee, etc.

Ici, le circuit électronique de commande 10 est constitué par un circuit imprimé, c'est-à-dire par une carte électronique.

Dans l'exemple, le bouton d'actionnement 4 est un bouton basculant, c'est-à-dire un bouton conçu pour pivoter autour d'un axe X4.

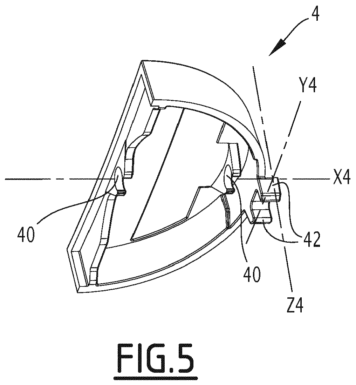

Comme visible à la figure 5, le bouton 4 comprend deux réceptacles 40 de forme circulaire, conçus pour recevoir chacun un bout d'arbre 62. Les deux bouts d'arbre 62 font partie d'une plaque support 6 moulée en matière plastique.

Le générateur 12 est capable de convertir une énergie mécanique en énergie électrique. Dans l'exemple décrit, le générateur 12 est un générateur électromagnétique, parfois mieux connu sous le nom de « harvester » (dérivé de l'Anglais). Il s'agit d'un modèle connu en soi, qui est commercialisé par la société ZF Friedrichshafen AG, c'est pourquoi il n'est pas décrit plus avant. Son principe de fonctionnement est le suivant : Le générateur 12 comprend un aimant permanent et au moins une bobine. Tout déplacement de l'aimant génère une variation du champ magnétique autour des spires de la ou des bobines. Chaque bobine, comme tout circuit électrique placé dans un champ magnétique variable, est alors parcourue par un courant électrique, qualifié de courant induit.

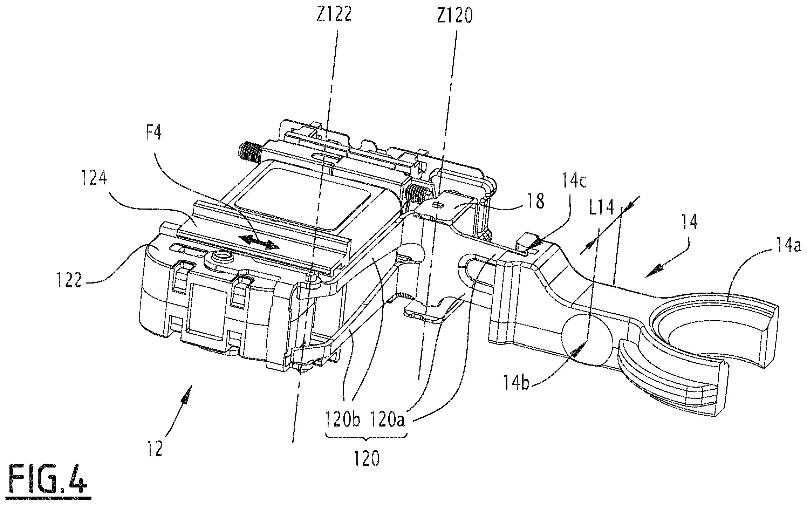

Comme visible à la figure 4, le générateur électrique 12 comprend avantageusement un mécanisme pour générer un mouvement de translation F4 à partir d'une rotation F2 de l'organe de transmission 14. Ce mécanisme comprend un levier d'actionnement 120.

De préférence, le levier 120 est en forme de L, et comprend une première partie 120a configurée pour coopérer avec l'organe de transmission 14 et une seconde partie 120b reliée à un bloc coulissant 122 du générateur 12. La liaison entre le bloc coulissant 122 et la partie 120b du levier 120 est une liaison pivot, dont l'axe de pivotement est référencé Z122. Les parties 120a et 120b du levier 120 sont chacune constituées de deux branches sensiblement parallèles.

Dans l'exemple, le levier 120 est monté pivotant autour d'un axe Z120, parallèle à l'axe Z122, au niveau de sa partie intermédiaire, c'est-à-dire entre les parties 120a et 120b. Typiquement, le levier 120 est interposé entre les deux branches d'une plaque en U 18 formant un support de pivotement.

Avantageusement, le bloc coulissant 122 comprend un ou plusieurs aimants permanents, permettant de générer un champ magnétique autour d'une ou plusieurs bobines (non représentées). Le bloc coulissant 122 est guidé dans un rail 124 en forme de U. Le sens de déplacement du bloc coulissant 122 est perpendiculaire à l'axe Z122.

Le générateur 12 est fixé à la plaque support 6 au moyen d'une pièce rapportée (non visible sur les figures), laquelle est clippée (ou clipsée), c'est-à-dire verrouillée élastiquement, sur la plaque support 6.

Dans l'exemple particulier des figures 1 à 5, l'organe de transmission 14 est un levier, mobile en rotation autour d'un axe Z14. L'axe X4 de pivotement du bouton 4 est perpendiculaire, et de préférence sécant, avec l'axe Z14 de pivotement de l'organe de transmission 14.

L'organe de transmission 14 fait le lien entre le bouton 4 et le générateur 12. Il s'agit donc d'une pièce distincte du bouton 4, et également distincte du générateur 12.

Typiquement, l'organe de transmission 14 est un levier articulé autour d'un pion 8 ayant un pied et un chapeau. Le chapeau présente une section au moins en partie circulaire, ici semi-circulaire, pour l'articulation du levier. Le pied est inséré dans un logement 60 de la plaque support 6, et est immobilisé en rotation par complémentarité de formes avec le logement 60.

Dans l'exemple, et comme visible à la figure 4, l'organe de transmission 14 comprend une partie 14a en C conformée pour coopérer avec le chapeau du pion 8, et permettre l'articulation de l'organe de transmission 14 autour du pion 8. L'organe de transmission 14 comprend également de façon avantageuse des moyens 14b pour coopérer mécaniquement avec le bouton d'actionnement 4 et des moyens 14c pour coopérer mécaniquement avec le générateur électrique 12.

Typiquement, les moyens 14c comprennent une fente, à l'intérieur de laquelle l'extrémité libre de la partie 120a du levier d'actionnement 120 est reçue.

De préférence, les moyens 14b comprennent deux faces bombées, disposées de manière opposée l'une par rapport à l'autre. Chacune des deux faces bombées est configurée pour coopérer avec une patte 42 du bouton 4, les deux pattes 42 du bouton 4 étant particulièrement visibles à la figure 5. Les deux pattes 42 s'étendent, sur la face inférieure du bouton 4, parallèlement à un axe Z4 perpendiculaire à l'axe de basculement X4 du bouton 4. Les deux pattes 42 sont par ailleurs alignées sur un axe commun Y4 perpendiculaire à la fois à l'axe X4 et à l'axe Z4.

Avantageusement, la largeur L14 du levier, référencée à la figure 4, et mesurée au niveau des faces bombées formant les moyens 14b, est sensiblement identique à l'écartement entre les deux pattes 42 du bouton 4. Notamment, en configuration assemblée de l'interrupteur 2, les pattes 42 sont disposées de part et d'autre de l'organe de transmission 14, et prennent appui respectivement contre les deux faces bombées.

Le bouton d'actionnement 2 et l'organe de transmission 14 sont spécifiquement conçus de sorte que la force d'activation F1 du bouton d'actionnement 4 est inférieure à la force F3 transmise au générateur 12 par l'organe de transmission 14. La force d'activation F1 du bouton d'actionnement est la force minimale nécessaire pour actionner le bouton 4, c'est-à-dire dans l'exemple pour faire basculer le bouton 4. Ainsi, étant donné que le bouton 4 est du type basculant, la force minimale est celle appliquée au plus loin de l'axe de basculement X4, pour profiter au maximum de l'effet de levier.

En détail, lorsqu'on exerce un effort F1 sur le bouton 4 de l'interrupteur 2, alors en position ouverte, le bouton 4 bascule autour de l'axe X4 et l'une des pattes 42 du bouton 4 pousse la face bombée 14b avec laquelle il coopère selon une direction parallèle à l'axe Y4. Cet effort de poussée entraine le pivotement de l'organe de transmission 14, c'est-à-dire du levier, autour de l'axe Z14. En pivotant, l'organe de transmission 14 tire sur le levier d'actionnement 120 du générateur électrique 12. L'interrupteur 2 est alors en position fermée. Le levier d'actionnement 120 bascule autour de l'axe Z120 et tire (ou pousse) sur le bloc coulissant 122, lequel se déplace alors en translation dans le rail 124. Le champ magnétique à l'intérieur du générateur 12 varie, et un courant induit est généré.

Ce courant induit est transformé sous une forme exploitable pour permettre l'alimentation du circuit de commande 10. L'impulsion électrique fournie par le générateur électrique permet au circuit de commande 10 de générer un signal, constitué par exemple d'ondes électromagnétiques et d'envoyer ce signal, par l'intermédiaire de l'antenne 16, au micromodule disposé à distance par voie sans-fil, typiquement par voie hertzienne.

Le générateur 12 est dimensionné pour générer une énergie électrique dès lors que l'effort appliqué sur le levier est de 4,20 N au minimum. Un calcul théorique montre alors que cet effort est atteint dès lors que le bouton 4 transmet à l'organe de transmission 14 un effort de 6,9 N environ, notamment au niveau de l'une des faces bombées 14b de l'organe de transmission 14. Egalement, on montre qu'un tel effort de 6,9 N peut être atteint dès lors que l'on applique, au minimum, un effort de 1,7 N environ sur le bouton 4.

On comprend donc que l'effort qui est finalement transmis au générateur 12 à travers l'organe de transmission 14 de l'interrupteur 2 est supérieur à l'effort F1 appliqué en entrée, c'est-à-dire à l'effort exercé par un utilisateur lorsqu'il appuie sur le bouton 4. Ceci provient en fait des effets de levier que l'on retrouve dans la cinématique d'actionnement de l'interrupteur 2.

En variante non représentée, l'interrupteur 2 comprend un moyen de rappel en position ouverte, c'est-à-dire en position de repos, dans laquelle l'interrupteur ne transmet aucun signal à destination de l'interrupteur filaire. Ce moyen de rappel peut par exemple prendre la forme d'un ressort à lame, positionné au centre en dessous du bouton.

Les caractéristiques du mode de réalisation décrit sur les figures et des variantes non représentées peuvent être combinées entre elles pour générer de nouveaux modes de réalisation de l'invention.

## Revendications

1. Dispositif de commande sans fil (2), comprenant :
- un bouton d'actionnement (4) du dispositif pour l'envoi d'un signal de commande à un autre dispositif, basculant et pivotant autour d'un axe (X4) sous l'effet d'une force d'activation (F1),
- un circuit électronique de commande (10), comportant un émetteur (16) capable de transmettre, par voie sans fil, un signal de commande à un autre dispositif de commande branché sur un fil électrique,
- un générateur électrique (12) pour alimenter le circuit (10), ce générateur étant capable de convertir une énergie mécanique en énergie électrique,
- un organe de transmission (14), pour transmettre une énergie mécanique appliquée sur le bouton d'actionnement (4) au générateur (12),
**caractérisé**
**en ce que** le générateur électrique (12) comprend au moins une bobine et un bloc coulissant (122) guidé dans un rail (124) et comprenant au moins un aimant,
**en ce que** le dispositif de commande sans fil (2) comprend un mécanisme incluant un levier d'actionnement (120), le levier d'actionnement comprenant une première partie (120a) configurée pour coopérer avec l'organe de transmission (14) et une seconde partie (120b) reliée au bloc coulissant (122) du générateur (12),
**en ce que** le mécanisme est configuré pour générer un mouvement de translation (F4) à partir d'un mouvement de rotation (F2) de l'organe de transmission,
**en ce que** l'organe de transmission (14) est un levier articulé autour d'un pion (8) ayant un pied et un chapeau, mobile en rotation autour d'un axe de pivotement (Z14) perpendiculaire, et de préférence sécant, avec l'axe de pivotement (X4) du bouton d'actionnement (4), l'organe de transmission comprenant une partie (14a) en C conformée pour coopérer avec le chapeau du pion (8) et permettre l'articulation de l'organe de transmission autour du pion, des premiers moyens (14c) pour coopérer mécaniquement avec la première partie (120a) du levier d'actionnement (120) et des seconds moyens (14b) pour coopérer mécaniquement avec le bouton d'actionnement (4),
**en ce que** l'organe de transmission (14) est configuré pour pivoter (F2) sous l'effet de la force d'activation (F1) du bouton d'actionnement (4) lorsque le bouton d'actionnement (4) pousse sur les seconds moyens (14b) de l'organe de transmission (14),
**en ce que** le levier d'actionnement (120) est configuré pour basculer autour d'un axe (Z120) lorsque l'organe de transmission pivote autour de son axe de pivotement (Z14),
**en ce que** le bloc coulissant (122) est configuré pour être déplacé (F4) en translation dans le rail (124), sous l'effet du basculement du levier d'actionnement,
de telle sorte que le bouton d'actionnement et l'organe de transmission sont spécifiquement conçus de sorte que la force d'activation (F1) du bouton d'actionnement est inférieure à la force (F3) transmise au générateur par l'organe de transmission.

2. Dispositif de commande selon la revendication précédente, dans lequel les premiers moyens (14b) comprennent deux faces bombées.

3. Dispositif de commande selon l'une des revendications précédentes, dans lequel le bouton (4) comprend au moins une, de préférence deux pattes (42) aptes à coopérer avec l'organe de transmission (14).

4. Dispositif de commande selon la revendication précédente, dans lequel les deux pattes (42) sont disposées de part et d'autre des seconds moyens (14b) de l'organe de transmission (14) et sont aptes à pousser l'organe de transmission suivant une direction perpendiculaire à un axe (X4) de basculement du bouton (4).

5. Dispositif de commande selon l'une quelconque des revendications précédentes, dans lequel les premiers moyens (14c) de l'organe de transmission (14) comprennent une fente dans laquelle est reçue la première partie (120a) du levier d'actionnement (120).

6. Ensemble comprenant un dispositif de commande sans fil (2) selon l'une des revendications précédentes et un autre dispositif de commande, qui est apte à être branché sur un fil électrique et qui comporte un micro-récepteur configuré pour recevoir un signal de commande envoyé par le dispositif de commande sans-fil (2).

## Patentansprüche

1. Drahtloses Steuervorrichtung (2), umfassend:
- eine Taste (4) zu Betätigung der Vorrichtung zum Senden eines Steuersignals an eine andere Vorrichtung, die mittels einer Betätigungskraft (F1) um eine Achse (X4) gekippt und geschwenkt wird,
- einen elektronischen Steuerschaltkreis (10) mit einem Sender (16), der geeignet ist, ein Steuersignal drahtlos an eine andere, mit einer elektrischen Leitung verbundene Steuervorrichtung zu übertragen,
- einen elektrischen Generator (12) zur Versorgung des Schaltkreises (10), wobei der Generator geeignet ist, mechanische Energie in elektrische Energie umzuwandeln,
- ein Übertragungselement (14) zur Übertragung einer auf die Betätigungstaste (4) aufgebrachten mechanischen Energie auf den Generator (12),
**dadurch gekennzeichnet,**
**dass** der elektrische Generator (12) mindestens eine Spule und ein in einer Schiene (124) geführtes Gleitstück (122) mit mindestens einem Magneten umfasst,
**dass** die drahtlose Steuervorrichtung (2) einen Mechanismus mit einem Betätigungshebel (120) umfasst, wobei der Betätigungshebel ein erstes Teil (120a), das ausgebildet ist, mit dem Übertragungselement (14) zusammenzuwirken, und ein zweites Teil (120b) umfasst, das mit dem Gleitstück (122) des Generators (12) verbunden ist,
**dass** der Mechanismus ausgebildet ist, eine Translationsbewegung (F4) aus einer Rotationsbewegung (F2) des Übertragungselements zu erzeugen,
**dass** das Übertragungselement (14) ein Hebel ist, der um einen Zapfen (8) mit einem Fuß und einer Kappe angelenkt ist, um eine Schwenkachse (Z14) senkrecht und vorzugsweise die Schwenkachse (X4) der Betätigungstaste (4) schneidend drehbar ist, wobei das Übertragungselement ein C-förmiges Teil (14a), das ausgebildet ist, mit der Kappe des Zapfens (8) zusammenzuwirken und die Anlenkung des Übertragungselements um den Zapfen zu ermöglichen, erste Mittel (14c), um mechanisch mit dem ersten Teil (120a) des Betätigungshebels (120) zusammenzuwirken, und zweite Mittel (14b), um mechanisch mit der Betätigungstaste (4) zusammenzuwirken, umfasst,
**dass** das Übertragungselement (14) ausgebildet ist, unter der Wirkung der Betätigungskraft (F1) der Betätigungstaste (4) zu schwenken (F2), wenn die Betätigungstaste (4) auf die zweiten Mittel (14b) des Übertragungselements (14) drückt,
**dass** der Betätigungshebel (120) ausgebildet ist, um eine Achse (Z120) zu schwenken, wenn das Übertragungselement um seine Schwenkachse (Z14) schwenkt,
**dass** das Gleitstück (122) ausgebildet ist, unter der Wirkung des Kippens des Betätigungshebels in der Schiene (124) translatorisch verschiebbar (F4) zu sein,
derart dass die Betätigungstaste und das Übertragungselement speziell dafür entworfen sind, dass die Betätigungskraft (F1) der Betätigungstaste kleiner ist als die Kraft (F3), die das Übertragungselement auf den Generator überträgt.

2. Steuervorrichtung nach dem vorhergehenden Anspruch, bei der die ersten Mittel (14b) zwei gewölbte Flächen aufweisen.

3. Steuervorrichtung nach einem der vorhergehenden Ansprüche, bei der die Taste (4) mindestens eine, vorzugsweise zwei Ansätze (42) aufweist, die geeignet sind, mit dem Übertragungselement (14) zusammenzuwirken.

4. Steuervorrichtung nach dem vorhergehenden Anspruch, bei der die beiden Ansätze (42) auf beiden Seiten der zweiten Mittel (14b) des Übertragungselements (14) angeordnet sind und geeignet sind, das Übertragungselement gemäß einer Richtung senkrecht zu einer Kippachse (X4) der Taste (4) zu drücken.

5. Steuervorrichtung nach einem beliebigen der vorhergehenden Ansprüche, bei der die ersten Mittel (14c) des Übertragungselements (14) einen Schlitz aufweisen, in dem das erste Teil(120a) des Betätigungshebels (120) aufgenommen ist.

6. Baugruppe mit einer drahtlosen Steuervorrichtung (2) nach einem der vorhergehenden Ansprüche und einer weiteren Steuervorrichtung, die geeignet ist, an eine elektrische Leitung angeschlossen zu werden und die einen Mikroempfänger aufweist, der zum Empfang eines von der drahtlosen Steuervorrichtung (2) gesendeten Steuersignals ausgebildet ist.

## Claims

1. Wireless control device (2), comprising:
- an actuating button (4) for actuating the device in order to send a control signal to another device, tilting and pivoting about an axis (X4) under the effect of an activation force (F1),
- an electronic control circuit (10) comprising a transmitter (16) capable of transmitting, wirelessly, a control signal to another control device connected to an electric wire,
- an electrical generator (12) for supplying power to the circuit (10), the generator being capable of converting mechanical energy into electrical energy,
- a transmission member (14) for transmitting mechanical energy applied to the actuating button (4) to the generator (12),
**characterised in that** the electrical generator (12) comprises at least one coil and a sliding block (122) which is guided in a rail (124) and comprises at least one magnet,
**in that** the wireless control device (2) comprises a mechanism including an actuating lever (120), the actuating lever comprising a first portion (120a) configured to cooperate with the transmission member (14), and a second portion (120b) connected to the sliding block (122) of the generator (12),
**in that** the mechanism is configured to generate a translation movement (F4) from a rotation movement (F2) of the transmission member,
**in that** the transmission member (14) is a lever articulated about a pin (8) having a foot and a cap, rotatable about a pivot axis (Z14) which is perpendicular to, and preferably intersects, the pivot axis (X4) of the actuating button (4), the transmission member comprising a C-shaped portion (14a) shaped to cooperate with the cap of the pin (8) and to permit articulation of the transmission member about the pin, first means (14c) for cooperating mechanically with the first portion (120a) of the actuating lever (120), and second means (14b) for cooperating mechanically with the actuating button (4),
**in that** the transmission member (14) is configured to pivot (F2) under the effect of the activation force (F1) of the actuating button (4) when the actuating button (4) pushes on the second means (14b) of the transmission member (14),
**in that** the actuating lever (120) is configured to tilt about an axis (Z120) when the transmission member pivots about its pivot axis (Z14),
**in that** the sliding block (122) is configured to be displaced (F4) in translation in the rail (124) under the effect of the tilting of the actuating lever,
such that the actuating button and the transmission member are specifically designed so that the activation force (F1) of the actuating button is less than the force (F3) transmitted to the generator by the transmission member.

2. Control device according to the preceding claim, wherein the first means (14b) comprise two convex faces.

3. Control device according to any one of the preceding claims, wherein the button (4) comprises at least one, preferably two lugs (42) capable of cooperating with the transmission member (14).

4. Control device according to the preceding claim, wherein the two lugs (42) are arranged on either side of the second means (14b) of the transmission member (14) and are capable of pushing the transmission member in a direction perpendicular to a tilting axis (X4) of the button (4).

5. Control device according to any one of the preceding claims, wherein the first means (14c) of the transmission member (14) comprise a slot in which the first portion (120a) of the actuating lever (120) is received.

6. Assembly comprising a wireless control device (2) according to any one of the preceding claims and another control device which is capable of being connected to an electric wire and which comprises a micro receiver configured to receive a control signal sent by the wireless control device (2).
